# EUROPEAN PATENT SPECIFICATION

(11) **EP 4 567 611 B1**
(45) Date of publication and mention of the grant of the patent: **11.11.2026**
(21) Application number: 25161493.9
(22) Date of filing: 27.09.2019
(51) Int. Cl.: H04L 12/12, G06F 1/3287, G06F 1/26, G06F 13/24, H04W 52/02, G06F 1/3203, G06F 13/364, H04L 12/40, G06F 1/3209, G06F 1/3234, G06F 1/3296

(54) **POWER MANAGEMENT ARRANGEMENT AND METHOD OF OPERATION**
LEISTUNGSVERWALTUNGSANORDNUNG UND BETRIEBSVERFAHREN
AGENCEMENT DE GESTION D'ÉNERGIE ET PROCÉDÉ DE FONCTIONNEMENT

(30) Priority: 27.09.2018 LU 100947
(43) Date of publication of application: 11.06.2025
(62) Document number(s) of the earlier application(s) in accordance with Art. 76 EPC: 19778514.0 / 3 857 816
(73) Proprietor: Nanopower Semiconductor AS, 4611 Kristiansand (NO)
(72) Inventor: CORREIA XAVIER, William, 3731 Skien (NO)
(74) Representative: Sonnenberg Harrison Partnerschaft mbB

(56) References cited:
- WO-A1-2017/165906
- US-A1- 2009 259 863
- US-A1- 2014 229 644
- US-B1- 9 503 969

## Description

### Cross-Relation to other applications

This application claims the priority of and benefit to Luxembourg Patent Application No. LU 100947 filed on 27 September 2018.

### Field of the Invention

The invention relates to a power management arrangement as well as a method of operation of the power management arrangement in a system.

### Background to the Invention

Systems are known which comprise a plurality of peripherals and a power supply, such as a battery or energy harvesting.

One example of a system is a battery powered wireless system for temperature monitoring. Similarly, the system could also be a cellular phone with many different peripheral components which need to be managed.

The term "Internet of Things" (abbreviated to IoT) has been developed to describe interconnected devices and refers to interconnection of uniquely identifiable external devices within an Internet infrastructure. Each one of the interconnected devices is allocated a unique IP address to enable the devices to be identified in the IoT network. Take-up of the IoT networks has been increasing and ultimately, IoT technology is expected to result in new, wide-ranging types of applications in which virtually any type of physical thing may be monitored and provide information about itself or its surroundings and/or may be remotely accessed over a network, such as a local network, an intranet, or the Internet.

Such IoT networks are known, for example, from US Patent No US 9,497,572 (Britt et al, assigned to Afero, Inc.) which teaches an IoT network and a method with a so-called IoT hub connected via a wireless system to an IoT device and a local communication interface to communicatively couple the IoT hub with a plurality of different types of IoT devices. The IoT device has a memory for storing program code and a microprocessor for executing the program code. The program code in this patent is described as including basic building blocks to enable a developer to implement any type of IoT device.

Similarly, US Patent 9,503,969 B1 (Zakaria, assigned to Afero, Inc), describes an IoT network with the connectivity between a plurality of IoT devices and an IoT hub. The patent discloses an apparatus and method for adjusting a scan interval or scan width of BLE devices, which are located in the IoT devices. The IoT devices have one or more peripherals, such as sensors, which are located within the IoT devices. The focus of this patent is linked to low power sleep states of the BLE modules in the IoT devices but addresses how the wireless connection can be reinstated between the IoT device and the IoT hub following wake up of the BLE module. The patent does not address how a low power state can be enabled or managed within the IoT device.

The development and adoption of IoT solutions have been comparatively slow due to issues related to connectivity, a lack of standardization, and power consumption.

Connectivity for IoT solutions is currently commonly solved using the Bluetooth protocol. Other protocols are used, such as IEEE 802.11, DECT, Zigbee, and proprietary protocols. The Bluetooth protocol for wireless communication is an open specification that facilitate low-power, short-range, and low-cost connections between the IoT devices and an IoT hub. There are several Bluetooth devices, such as but not limited to, smartphones, connected cars, electronic cameras, toys, health monitoring systems, etc. that are commercially available. However, the devices implementing the Bluetooth protocol, especially the standalone ones, also have limited energy resources for keeping a Bluetooth transceiver running the Bluetooth protocol for longer periods of time.

The Bluetooth 4.0 protocol was released in June 2011 to address power consumption issues and has led to very low energy consumption. The Bluetooth 4.0 protocol includes a Bluetooth Low Energy feature (BLE) which enables Bluetooth devices to transmit very small packets of data at a time, while consuming significantly less power compared to those devices implementing previous Bluetooth protocols. Thus, using this small data packets, broadcasting feature, Bluetooth devices can function for months or even years on small-sized batteries.

The same principle is applicable to other communication technologies, like Wi-Fi, Zig Bee, GSM/Cellular, however their requirements in terms of power are typically significantly larger than BLE.

Connecting IoT devices such as door locks, environmental sensors, home security sensors, beacons, or asset trackers, for example, requires an electrical source or power storage such as a battery to power each of the connected IoT devices. External electrical sources are often not conveniently located or available, while batteries have a finite lifetime depending on their size and the power consumption of the IoT device in different modes of operation.

The continuous reduction of the size of electronic devices has led to the development of new power management arrangements in order to keep battery sizes small and battery longevity acceptable. A more recent trend in microcontroller systems is the low power consumption while maintaining communication features. It is now common with small systems including protocols such as BLE, GPS, Wi-Fi or Zig Bee that are powered by a simple CR2450 battery. Additional techniques to reduce power consumption involve keeping microcontrollers and other components in some form of idle mode for as long as possible to save power and thereby to increase the battery lifetime.

Despite these improvements in power consumption, there are still power consumption issues to be resolved for the battery powered devices. Firstly, microcontrollers do not perform power management. Secondly, microcontroller-based systems will always experience a continuous power consumption due to the continuous consumption of power by the microcontroller itself. Finally, the process of waking up a wireless chip from an idle mode to an active mode or wake-up takes some time (as discussed in the above-referenced US 9,503,969) and there is an additional increase in current and thus power consumption during the wake-up period. This means that a wireless chip is seldom a good choice for systems powering on/off to save energy.

WO 2017/165906 A1 discloses a low power control and monitoring network that comprises devices connected to a wired medium. Each device has a CPU with a minimum power consumption state while powered by a power supply; a transceiver controllable by the CPU for communication on the wired medium a wakeup circuit generating a pulse of predetermined data or pulse characteristics for waking up the CPU and transceiver and for waking up the CPU of another device. Power supplies supply power to the devices. The power supplies can be provided and removed. The patent application does not teach a device that, apart from comprising the processing module, the interrupt channels, and the local storage, further comprises a power management unit to provide an adjustable supply voltage to peripherals and the processing module and other possibly connected devices.

US 2014/229644 A1 discloses methods, apparatuses, systems for including interrupt functionality in sensor interconnects field. A System on a Chip (SOC) includes a host and a unified sensor interconnect. A unified sensor interconnect is to be coupled to the host and at least one device. In one or more implementations, the unified sensor interconnect includes a clock line, data line, ground line, and power source line. The unified sensor interconnect is to enable interrupts from at least one of the host or the at least one device.

US 9 503 969 B1 discloses an apparatus and method for adjusting a scan interval or scan width of a BTLE device. One embodiment of the method comprises: placing a Bluetooth Low Energy (BTLE) device of an IoT device into a low power or sleep state; waking the BTLE device from the low power or sleep state in response to a specified schedule or set of conditions; attempting to establish a connection between the BTLE device and a BTLE device of an IoT hub using a first scan width and/or scan interval; dynamically adjusting the first scan width and/or scan interval to a second scan width and/or scan interval, respectively, based on a randomly-selected value if a connection is not established after a specified time period; and reattempting to establish a connection between the BTLE device of the IoT device and the BTLE device of the IoT hub using the second scan width and/or scan interval.

US 2009/259863 A1 discloses an apparatus and method for power management in limited-powered devices. One embodiment of the method comprises providing interrupt events which are designed as wakeup events. When the CPU is in a reduced power state, an interrupt signal is directed to a wakeup event handler. In response to the signal, the wakeup event handler causes full power to be restored to the CPU, so that the event can be subsequently serviced. The wakeup event handler sends a signal to a power management unit that is connected between the CPU and a power source. In response to the signal, the PMU restores power to the power rail that supplies the CPU.

To address these problems, an improved power management arrangement has been developed.

### Summary of the Invention

A power management arrangement and a method for managing power consumption in a device connection system is described in this document. The device connection system comprises the power management arrangement and one or more peripherals.

A power management arrangement can be implemented as discrete components or can be entirely embedded on silicon.

The power management arrangement is located in a device and being configured for managing a power consumption of the device, such as an IoT device, and comprises a processing module connected to one or more data communication lines which are used for exchanging data within the power management arrangement and with one or more peripherals. Interrupt channels are configured to send and receive a bidirectional interrupt signal within the power management arrangement, to and from one or more of the peripherals to wake up the processing module and to one or more peripherals and thereby initiate exchange of items of data between the one or more peripherals and the processing module, are present in the power management arrangement. A local storage is connected to the processing module and configured to store logic operations relating to communication with and operation of the power management arrangement and the one or more peripherals. The logic operations include transfer of data. A power management unit is connected to power lines and is configured to provide an adjustable supply voltage within the power management arrangement and to the one or more peripherals and to the processing module through power lines.

The interrupts are bidirectional within the power management arrangement and to and from the peripherals. The interrupts can be sent from the processing module to one of the peripherals to initiate communication between the processing module and the peripheral. The peripheral will acknowledge the interrupt and data can be exchanged between the peripheral and the processing module. In another aspect, the peripheral will initiate the communication by sending the interrupt to the processing module. The receipt of the interrupt will trigger the processing module to wake up from an idle mode or sleep mode. The processing module will acknowledge the receipt of the interrupt and will then exchange data with the peripheral.

Interrupts can either be direct or via an interrupt interface to wake up the processing module and the peripherals.

The power management arrangement may also include a timer which can be used to generate interrupts to the processing module or peripherals over the interrupt channels at a desired interval or time and date.

The peripherals can be a multitude of different types, both with master and slave capabilities. Masters are bidirectional, i.e., can both receive and give settings or commands, e.g., a processor. Slaves must be set by the system when activated, e.g., sensors which monitor physical properties, such as but not limited to movement, temperature, air pressure, fluid flow, and tilt/angle. Non-limiting examples of the sensors include accelerometer, gyroscopes, tilt sensors, microphones, cameras/videos, and hygrometers. The peripherals typically transfer data including the values of the physical properties, interrupts, as well as a time stamp to the power management arrangement for processing, storage, and other tasks.

The power management arrangement also includes a local storage connected to the processing module which stores a plurality of logic operation rules and data related to communication and operation of the power management arrangement and the peripherals. During operation, the local storage is also available for runtime operations as well as storage of state variables for the power management arrangement and peripherals. Generally, the local storage is of a volatile type, but can be supplemented by a non-volatile storage for certain standalone or preconfigured cases that need to keep the storage without the need of power supply.

As noted above, the power management arrangement is connected to the peripherals over one or more data communication lines. These data communication lines can be idle, i.e., not carry any data and, in this idle time, the peripherals do not transmit any data to the power management arrangement. The peripherals may continue recording data and store the recorded data in local registers before passing the recorded data to the processing module and/or the host at a later point in time. The peripherals are, in other words, not continuously active transmitting data, thus lowering the power consumption.

In one aspect, the power management arrangement has at least a host which is connected to the data communication lines, the interrupt channels, and the power lines. The host is configured to control, and set rules for, the power management arrangement and for the one or more peripherals. The host is able to exchange data directly with the peripherals through the data communication lines. The host is also able to exchange data through the processing module. The host will also be connected to the power management arrangement via bidirectional interrupt channels. The host is the master that in active mode can control and set rules for the power management arrangement and the peripherals. The host may have its own master devices directly attached to it as secondary hosts, e.g., for specific tasks. The host can in active mode be directly connected to the peripherals if required. As for the peripherals, the host will often be powered off to conserve power, handing over control to the power management arrangement when powering off or going into sleep/idle mode. One non-limiting example of the host is a wireless chip. One or more secondary hosts may be further connected to the data communication lines, the interrupt channels, and the power lines.

A plurality of the power lines carry through a power multiplexer a supply voltage to the peripherals, the host, and components within the power management arrangement. The level of the supply voltage can be made adjustable through an adjustable voltage supply, such as a pulse width modulator, to supply a voltage that is just sufficient to ensure the operation of the different consumers of power. In other words, the components are not necessarily supplied with a standard 1.2, 3.5, or 5V supply voltage, but at a voltage to enable them to operate whilst consuming the minimum amount of power.

The power management arrangement may also include a connection unit, e.g., as part of the host, such as a wireless transceiver, which function is to connect the device with the power management arrangement to a controlling unit, such as an IoT hub as known from the art.

A method for managing power in a system comprising a power management arrangement, comprising a processing module, and at least one peripheral is also disclosed. The method comprises initiating a connection between the peripheral and the processing module by exchanging a bidirectional interrupt signal, for waking up the processing module and initiating data transfer of items of data between the at least one peripheral and the processing module, storing logic operations in a local storage relating to communication with and operation of the power management arrangement and the one or more peripherals, the logic operations including transfer of data; and providing, by means of a power management unit of the power management device, an adjustable supply voltage within the power management arrangement and to the one or more peripherals and to the processing module through power lines. The waking up of the processing module can be initiated either on receipt of the interrupt signal from the at least one peripheral or on receipt of a wake-up signal from a timer.

In a further aspect of the invention instructions can be accessed, for example from a local storage in the power management arrangement and the accessed instructions are used by one of the peripherals or the processing module to perform a logic operation. The storage of the instructions in the local storage enables the processing module, the host and/or one or more of the peripherals to be switched off or put into idle or sleep mode and then recover its state on waking up.

The waking up of the processing module is in one aspect initiated on receipt of the interrupt signal from the one or more peripherals or of a wake-up signal from a timer.

In a another aspect, the method further comprises access of instructions from a local storage; and performing a logic operation using the accessed instructions on the one or more peripherals.

In a another aspect, the method further comprises performing a logic operation to start a host for receiving data from the processing module or directly from the one or more peripherals, the host being configured to control, and set rules for, the power management arrangement and the one or more peripherals. The method may comprise powering up the host.

In a another aspect, the method further comprises storage of updated instructions in the local storage.

In a another aspect, the method further comprises transferring instructions from the host to the local storage.

In a another aspect, the method further comprises setting the adjustable supply voltage.

### Description of the Drawings

Figs. 1-4 shows an illustrative embodiment of the power management arrangement as employed in a device.

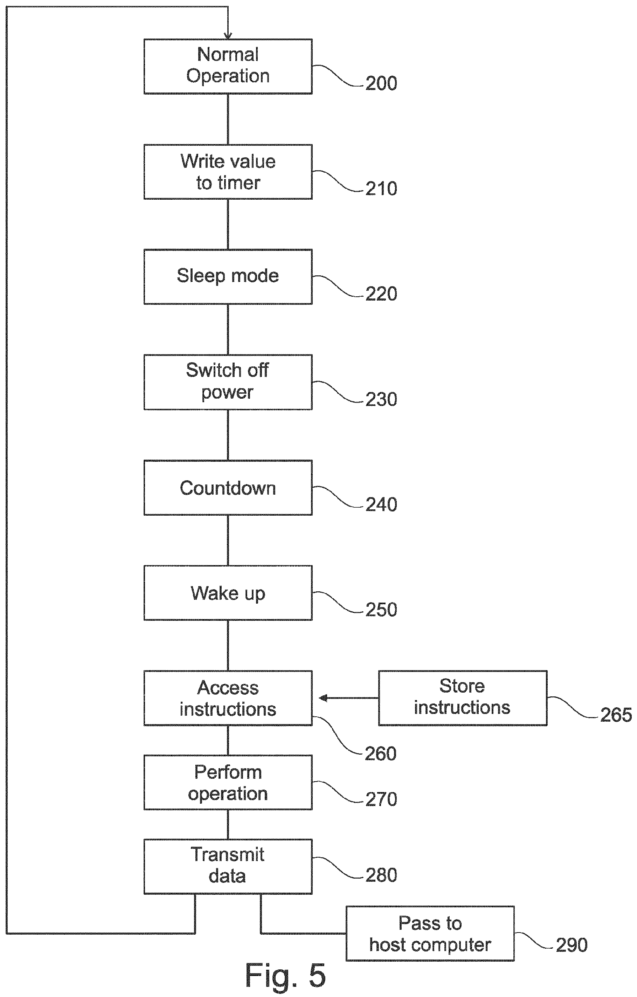

Fig. 5 shows an outline of the method for exchanging data between the power management arrangement and one or more peripheral.
Fig. 6 shows an example of a power management unit.

### Detailed Description of the Invention

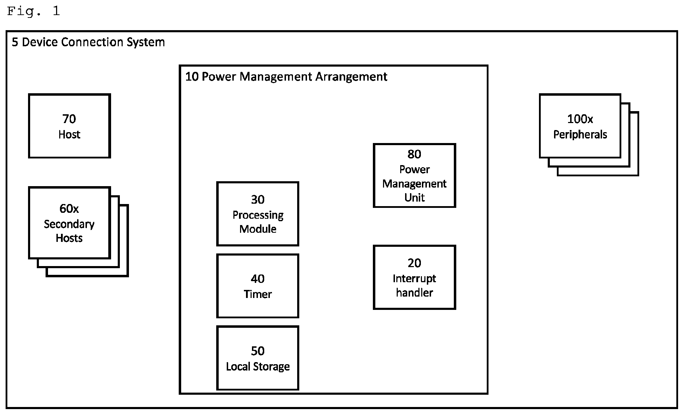

Figs. 1-4 show an example of a device connection system 5 as described in this document. The device connection system 5 illustrated here is merely one example of a typical device connection system and that the invention is not limited to any particular device connection system 5.

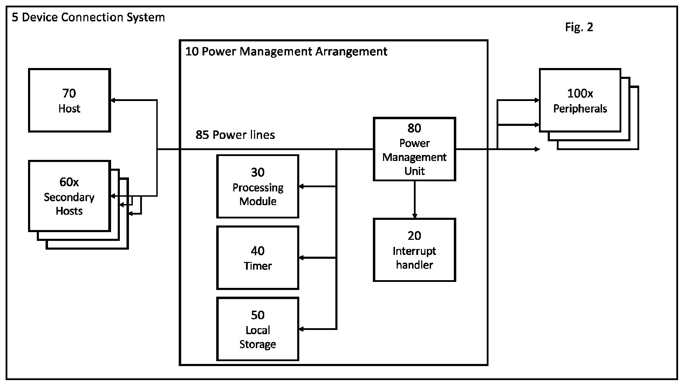

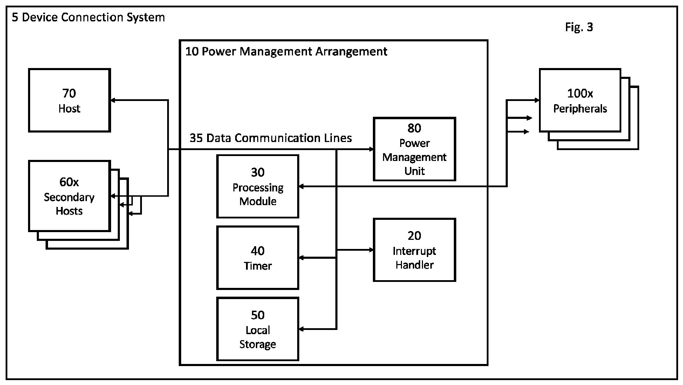

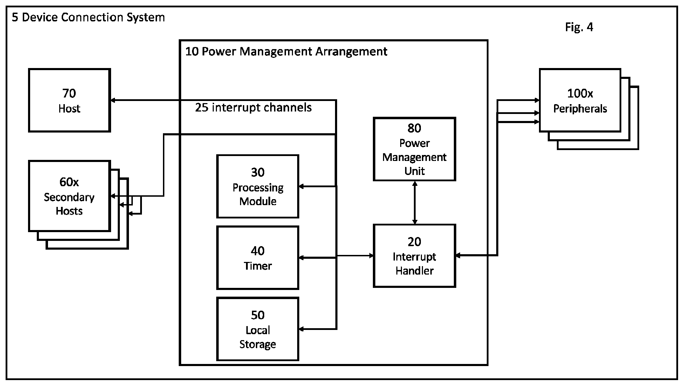

The device connection system 5 has a power management arrangement 10 which is connected to one or more peripherals 100 by means of data communication lines 35 (Fig. 3), interrupt channels 25 (Fig. 4), and power lines 85 (Fig. 2) from a power management unit 80 to provide a supply voltage to the peripherals 100. The data communication lines 35, interrupt channels 25, and power lines 85 could be implemented as different lines at the physical level or could be implemented as a single wire connection. The power management arrangement 10 also has a processing module 30, a timer 40, and a local storage 50. The functions of these modules within the power management arrangement 10 will be explained later.

The data communication lines 35 can be, for example, tracks on a semiconductor (e.g. silicon chip) or wired connections.

A host 70 is a processing unit which is separate from the processing module 30 in the power management arrangement 10 and is connected to and able to control the power management arrangement 10 and the one or more peripherals 100. The functions of the host 70 include further processing of the data, wireless transfer of data, etc. There may also be secondary hosts 60 connected to the power management arrangement 10 and, possibly, one or more of the peripherals 100. Typically, the secondary hosts 60 are master devices utilized for special tasks or due to specific capabilities like optimized for real-time execution or low power processing. Such secondary hosts 60 are known in multi-core arrangements and offer optimized processing units for dedicated tasks to offload some of the processing power needed by the host 70. It would be possible, for example, to have one of the cores handling data transfers under the Bluetooth protocol whilst another one of the cores is handling image processing.

The peripherals 100 can have either master or slave capabilities and be either analog or digital. Examples include sensors which monitor physical properties, such as but not limited to movement, temperature, air pressure, fluid flow, and tilt/angle. Non-limiting examples of the sensors include accelerometer, gyroscopes, tilt sensors, microphones, cameras/videos, and hygrometers. The peripherals 100 may collect and transmit data. Some of the peripherals 100 will have internal registers 110 and may write a limited amount of this collected data into one or more of the internal registers 110. The peripherals 100 may or may not also perform a limited range of operations depending on the peripherals selected. The amount of power consumed by the peripherals 100 depends on their type and activity.

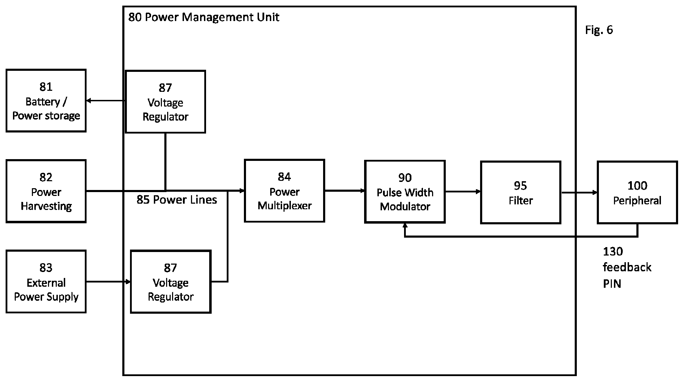

An overview of the power management unit 80 is shown in Fig. 6. The power management unit 80 is, for example, a variable supply voltage device or a pulse-width modulator which can be applied to vary the output voltage and power over the power lines 85. Some peripherals 100 may have a power supply through the same physical connections as data communication lines 35.

The power management unit 80 can handle different power sources, e.g., batteries / energy storage 81, energy harvesting 82, and external power supply 83. The setup will vary the power through an all-to-all power multiplexer 84 setup, e.g., to facilitate operation based on energy harvesting 83 in different modes of operation by being able to switch between sources. As will be explained below, the small amount of power required to operate the power management arrangement means that in many cases the energy harvesting 83 may be sufficient to power at least parts of the device connection system.

The power management unit 80 is set up to supply the optimal voltage to the individual power consumer; peripherals 100, internal components of the power management arrangement 10, the host 70, the secondary hosts 60, etc. The power multiplexer 84 is used to supply one of several alternatives to achieve a solution for each use case. One exemplary use case uses a pulse width modulator 90 where the length of the duty cycle of the pulse width modulator 90 adjusts the level of the supply voltage and thus the amount of power supplied to the power consumer of the power (e.g. one or more of the peripherals 100) over the power lines 85. A filter 95 can be connected between the pulse width modulator 90 and the power consumer to smooth out the level of the supply voltage. Typical operating ranges would be 1.2-5V, but the specifications of the power consumer in question will give the operating voltage range of each individual power consumer.

The length of the duty cycle from the pulse width modulator 90 is initially set to provide the minimum operating voltage while maintaining necessary functionality to the relevant power consumer, such as one of the peripherals 100, in order to reduce the amount of power required by the power consumer. It is known that, as certain components in the power consumers age, then there may be a need to provide a higher operating voltage and more power. The peripherals 100, like for example the sensors 100a, 100b or 100c, have an output pin 130 which provides a feedback signal from the peripherals 100 to the pulse width modulator 90 to extend or shorten the duty cycle depending on the amount of power and/or the required operating voltage that is required. This would happen if, for example, the data from the peripheral 100 is no longer being produced accurately. It is also possible for one of the peripherals 100 to be in an idle or sleep state such that the peripheral is consuming only a small amount of power (in the nanoampere range, for example). On receipt of a signal from the interrupt channel 25 connected to the peripheral, the peripheral will be woken up and need to consume more power which is signaled to the attached pulse width modulator 90 to lengthen the duty cycle and supply more power.

Each pair of pulse width modulators 90 and filters 95 will be connected to different power lines 85 (shown in Fig. 6) as the operating voltages of the power consumers, e.g. the peripherals, will be different.

The power management arrangement 10 will be connected to a host 70 or one or more secondary hosts 60 through the data connection lines 35 and interrupt channels 25. The peripherals 100 may be controlled directly by the host 70 or the one or more secondary hosts 60 whilst the host 70 or the secondary hosts 60 are in operation. When the host 70 or the secondary host 60 are shut down to save energy any operations will be taken over by the power management arrangement 10.

The power management arrangement 10 as shown in Fig.3 provides data communication lines 35 to the peripherals 100 for bidirectional communication, i.e. control and exchange of data between all components connected to the device connection system, e.g., peripherals 100, host 70, secondary hosts 60, and internal components of the power management arrangement 10 like the processing module 30, the internal storage 50, and the timer 40.

The power management arrangement 10, as can be seen in Fig.2, is also provided with the interrupt interface 20 which connects the processing module 30, host 70, secondary hosts 60, peripherals 100, and other components of the power management arrangement 10 through interrupt channels 25. The interrupt interface 20 routes bidirectional interrupts to one or more of the connected components. For example, the peripherals 100 may be instructed to transfer any data which may be stored in the respective internal registers 110 of the peripherals 100 and pass the collected data through the data communication lines 35 to, e.g., the processing module 30, the host 70, or the secondary hosts 60. Similarly, the processing module 30 can be asked to wake-up from a low power state to an active mode for receiving data from the peripherals 100.

A local storage 50 is present on the power management arrangement 10. The local storage 50 stores rules, tasks, data and state variables for the processing module 30, host 70, secondary hosts 60, and the individual peripherals 100. The rules and tasks are generated by the host 70 or predefined and written to the local storage 50 from the processing module 30. The combination of the processing module 30 and the local storage 50 is to provide a type of "mirror" for the host 70 to control the peripherals 100. The local storage 50 stores, in one aspect of the invention, only those operations that are necessary to wake up the peripherals 100 to obtain data from the peripherals 100 along the data communication lines 35. In one further aspect, there is no host 70 present in the system and the power management arrangement 10 is pre-programmed in production or an external memory added to or connected to the power management arrangement 10 to provide the rules and tasks. The local storage will consist of a volatile storage which can be upheld with power. It may store rules from the host 70 before host 70 sleep mode is engaged and/or state variables form any component of the system for faster wake up, as well as provide necessary storage for runtime operations. An optional non-volatile storage is necessary for all standalone applications or where predefined settings must be upheld also without power supply.

The processing module 30 can wake up the host 70 by sending an interrupt to the host 70, directly or via the aforementioned interrupt interface 20.

The deep sleep mode of the device connection system 5 is a mode in which the processing module 30 is unresponsive to any external signal along the communication lines 35. Still, the processing module 30 responds by waking up based on interrupts over the interrupt channels 25. The processing module 30 will require about 7 ns to wake up.

The power management arrangement 10 includes a timer 40 which is connected to the processing module 30 and also to the interrupt interface 20. The timer 40 provides an interrupt signal along the interrupt channels 25 to initiate the processing module 30 waking up and entering a processing mode.

The timer 40 is arranged as a countdown timer and is programmed to send an interrupt along the interrupt channels 25 at certain intervals to wake up the processing module 30 when the countdown time reaches zero. The initial value set in the countdown timer 40 is variable and depends on the requirements of the environment in which the device communication system 5 is used. The timer 40 is a simple device and consumes very little power. In a deep sleep mode, the device connection system 5 in total, including timer, will have a power consumption in the 10-15 nA range.

The timer 40 can also be set to count up, and combined with a calendar it is able to wake up on a set time and date, and adjust for variations between weekdays, holidays, time of day, etc. For example, should a peripheral 100 be used during the day but not at night, it would be possible to program the timer 40 to wake up the processing module 30 at different intervals depending on the time of day. At night, for example, it is likely that less data would be collected, and less data needed to be processed, as a result the timer 40 could wake up the processing module 30 at less frequent intervals. The local storage 50 stores more complicated rules and actions for waking up using the timer 40.

The processing module 30 on waking up, will send a signal via the interrupt interface 20 through the interrupt channels 25 to the peripherals 100 to inform the peripherals 100 that the processing module 30 is able to accept data. The selected peripherals 100 are powered up or already on depending on settings, and data is then transferred from the peripherals 100 over the data communication lines 35 to the processing module 30, host 70, or secondary host 60 and processed as usual.

In one version of the power management arrangement 10, it is possible to program the processing module 30 to merely collect data from selected peripherals 100 when waking up. Since the peripherals 100 consumes power, the processing module 30 will send the interrupt through the interrupt interface 20 only to those peripherals 100 from which data is required. Those peripherals 100 for which the data is not required would not receive an interrupt. So, for example, some of the peripherals 100 could be instructed to transfer the data every five minutes, while other peripherals 100 would be instructed to transfer at, for example, hourly intervals. This gives opportunities to further reduce the power consumption.

Fig. 4 shows an example of the operation of the power management arrangement 10. In a first step 200 the processing module 30 is operating normally, and data is being transferred through the data communication lines 35 to and from the processing module 30. In the subsequent step 210, a countdown value for the time until when a wake-up signal shall be sent to the processing module 30 is written into an internal register of the timer 40. This countdown value could be a pre-stored default value or could depend on the time of day or other circumstances, as explained in the previous text.

The processing module 30 shuts down the power to the peripherals 100 in step 220. Finally, in step 230, the processing module 30 enters the sleep mode and shuts down the data communication lines 35. The processing module 30 is now in deep sleep mode and will wake itself up in step 250 following an interrupt from the timer 40 when the timer 40 has counted down (step 240) from the value set into its internal register in step 210. The processing module 30 resumes normal operation (step 200). It is also possible for a wake-up signal to be issued from one or more of the peripherals 100 when the peripheral 100 needs to wake up the processing module 30. This could happen, for example, when a value of the data collected by the peripheral exceeded a threshold level. One example could be when the peripheral 100 is a temperature sensor. If the temperature decreases below a certain threshold value, then a heating unit might need to be switched on. Should the temperature be higher than the threshold value, then a cooling unit needs to be switched on. In both cases, the processing module 30 will need to be woken up to send the control signals to the required devices.

On waking up, the processing module 30 will in step 260 try to fetch instructions from any possible external host 70 or secondary hosts 60, and will automatically revert to instructions in the local storage 50 if no host 70 or secondary host 60 is present, awake or set to send instructions. In step 270 the processing module 30 will pass these instructions, for example, to one or more of the peripherals 100, host 70, or secondary hosts 60 where different logic operations are performed. These logic operations include transferring of data in step 280 from the peripherals 100 to/from the processing module 30, host 70, or secondary host 60. The instructions will have been previously stored in step 265 on the local storage 50 by the processing module 30, host 70, or secondary hosts 60. The processing module 30 will also access instructions concerning the amount of power to be supplied to the peripherals 100, processing module 30, host 70, and secondary hosts 60 by the power management unit 80. This is done setting the duty cycle in the pulse width modulator 90 to provide this specific operating voltage.

In order to reduce the power requirements on starting up of the peripherals 100, the peripherals are woken up with a minimum of power required to operate the peripherals 100. This minimum amount can be programmed initially, or the amount of power supplied to the peripherals 100 along the power lines 85 can be increased. The power management arrangement 10 wake up in around 7ns but depending on type and booting it will be appreciated that it may take longer time for peripherals 100 to wake up.

Finally, and optionally, in step 290, the data can be passed from the processing module 30 to the host 70. In some cases the data might be passed directly from the peripherals 100 to the host 70 or one of the secondary hosts 60.

A library to communicate with and configure the power management arrangement is provided which enable the power management arrangement 10 including the timer 40, the processing module 30, and the interrupt interface 20 to be programmed. API documentation is also provided for the developer to be able to use the library.

The implementation of the power management arrangement 10 is provided, for example, as an IP block which can be built into a circuit on silicon. The power management arrangement 10 will be delivered in the form of a module based on discrete components or directly on silicon, including CSP or QFN package and die for COB assembly.

### Reference Numerals

- 5: Device connection system
- 10: Power management arrangement
- 20: Interrupt interface
- 25: Interrupt channels
- 30: Processing module
- 35: Data communication lines
- 40: Timer
- 45: Timer Connection
- 50: Local storage
- 60: Secondary hosts
- 70: Host
- 80: Power management unit
- 81: Power storage / battery
- 82: Power harvesting
- 83: External power supply
- 84: Power multiplexer
- 85: Power lines
- 87: Voltage regulator
- 90: Pulse width modulator
- 95: Filter
- 100: Peripherals
- 100a, 100b, 100c: Sensors
- 110: Registers
- 130: Output Pin

## Claims

1. A power management arrangement (10) located in a device (5), the power management arrangement (10) being configured for managing a power consumption of the device (5) comprising:
- a processing module (30) connected to data communication lines (35) for exchanging data within the power management arrangement (10) and with one or more peripherals (100);
- interrupt channels (25) configured to send and receive a bidirectional interrupt signal within the power management arrangement (10), to and from the one or more of the peripherals (100) to wake up the processing module (30) and to one or more peripherals (100) and thereby initiate exchange of items of data between the one or more peripherals (100) and the processing module (30);
- a local storage (50) connected to the processing module (30) and configured to store logic operations relating to communication with and operation of the power management arrangement (10) and the one or more peripherals (100), the logic operations including transfer of data; and
a power management unit (80) connected to power lines (85) and configured to provide an adjustable supply voltage within the power management arrangement (10) and to the one or more peripherals (100) and to the processing module (30) through power lines (85).

2. The power management arrangement (10) according to claim 1, further comprising at least one of a host (70) connected to the data communication lines (35), the interrupt channels (25), and the power lines (85), the host being configured to control, and set rules for, the power management arrangement (10) and for the one or more peripherals (100).

3. The power management arrangement (10) according to any one of the above claims, wherein the one or more peripherals (100) comprises one or more of a master or a slave.

4. The power management arrangement (10) according to claim 3, wherein the master or the slave is one or more of an accelerometer (100a), a gyroscope (100b), a tilt sensor (100c), a temperature sensor, a fluid-level meter, flow meters, a microphone, a camera, and a hygrometer.

5. The power management arrangement (10) according to any one of the above claims, further comprising a timer (40) configured to send the interrupt signal to one of the processing module (30), the host (70), or one or more of secondary hosts (60) over the interrupt channels (25) to initiate a processing mode from a sleep or idle mode.

6. The power management arrangement (10) according to any one of the above claims, further comprising interruptable power lines (85) connected to the one or more peripherals (100), the host (70) or one or more of the secondary hosts (60).

7. The power management arrangement (10) of claim 6, further comprising at least one of a power multiplexer (84) or a pulse width modulator (90), configured to supply the adjustable supply voltage.

8. The power management arrangement (10) of any one of the above claims, further comprising a connection unit for connecting the power management arrangement (10) with an IoT hub.

9. The power management arrangement (10) of any one of the above claims, wherein the one or more peripherals (100) have an internal register (110).

10. The power management arrangement (10) of any one of claims 2 to 9, wherein the host (70) is directly connected to the one or more peripherals (100) through the data communication lines (35).

11. The power management arrangement (10) of claim 10, wherein the host (70) is adapted to communicate directly with the one or more peripherals (100) on receipt of an instruction.

12. A method for managing a power consumption in a device (5) comprising a power management arrangement (10) and one or more peripherals (100), the power management arrangement (10) comprising a processing module (30), the method comprising:
initiating (250) a bidirectional connection between the one or more peripherals (100) and the processing module (30) by exchanging a bidirectional interrupt signal within the power management arrangement (10) for waking up the processing module (30) and the one or more peripherals (100) and initiating exchange of items of data between the one or more peripherals (100) and the processing module (30);
storing logic operations in a local storage (50) relating to communication with and
operation of the power management arrangement (10) and the one or more peripherals (100), the logic operations including transfer of data; and
providing, by means of a power management unit (80) of the power management device (10), an adjustable supply voltage within the power management arrangement (10) and to the one or more peripherals (100) and to the processing module (30) through power lines (85).

13. The method of claim 12, wherein the waking up of the processing module (30) is initiated on receipt of the interrupt signal from the one or more peripherals (100) or of a wake-up signal from a timer (40).

14. The method of claim 12 or 13, further comprising access of instructions from a local storage (50); and
performing (270) a logic operation using the accessed instructions on the one or more peripherals (100).

15. The method of any one of claims 12 to 14, further comprising performing a logic operation to start a host (70) for receiving data from the processing module (30) or directly from the one or more peripherals (100) , the host being configured to control, and set rules for, the power management arrangement (10) and the one or more peripherals (100).

16. The method of any one of claims 12 to 15, further comprising powering up the host (70).

17. The method of one of claims 12 to 16, further comprising storage (265) of updated instructions in the local storage (50).

18. The method of one of claims 12 to 17, further comprises transferring instructions from the host (70) to the local storage (50).

19. The method of one of claims 12 to 18, further comprising setting the adjustable supply voltage.

## Patentansprüche

1. Energieverwaltungsanordnung (10), sich in einer Vorrichtung (5) befindend, bei welcher die Energieverwaltungsanordnung (10) zum Verwalten eines Energieverbrauchs der Vorrichtung (5) eingerichtet ist, umfassend:
- ein Verarbeitungsmodul (30), welches mit Datenkommunikationsleitungen (35) zum Austauschen von Daten innerhalb der Energieverwaltungsanordnung (10) und mit einem oder mehreren Peripheriegeräten (100) verbunden ist;
- Unterbrechungskanäle (25), die zum Senden und Empfangen eines bidirektionalen Unterbrechungssignals innerhalb der Energieverwaltungsanordnung (10) zu und von dem einen oder den mehreren Peripheriegeräten (100) eingerichtet sind, um das Verarbeitungsmodul (30) aufzuwecken, und zu einem oder mehreren Peripheriegeräten (100) und dadurch den Austausch von Datenelementen zwischen dem einen oder den mehreren Peripheriegeräten (100) und dem Verarbeitungsmodul (30) einzuleiten;
- einen lokalen Speicher (50), der mit dem Verarbeitungsmodul (30) verbunden und zum Speichern von Logikoperationen in Bezug auf die Kommunikation mit und den Betrieb der Energieverwaltungsanordnung (10) und des einen oder der mehreren Peripheriegeräte (100) eingerichtet ist, die Logikoperationen beinhaltend die Übertragung von Daten; und
eine Energieverwaltungseinheit (80), die mit Stromleitungen (85) verbunden und zum Bereitstellen einer einstellbaren Versorgungsspannung innerhalb der Energieverwaltungsanordnung (10) und zu dem einen oder den mehreren Peripheriegeräten (100) und zu dem Verarbeitungsmodul (30) durch Stromleitungen (85) eingerichtet ist.

2. Energieverwaltungsanordnung (10) nach Anspruch 1, ferner umfassend mindestens einen Host (70), der mit den Datenkommunikationsleitungen (35), den Unterbrechungskanälen (25) und den Stromleitungen (85) verbunden ist, bei welcher der Host zum Steuern und Festlegen von Regeln für die Energieverwaltungsanordnung (10) und für das eine oder die mehreren Peripheriegeräte (100) eingerichtet ist.

3. Energieverwaltungsanordnung (10) nach einem der vorstehenden Ansprüche, das eine oder die mehreren Peripheriegeräte (100) umfassend einen Master und/oder einen Slave.

4. Energieverwaltungsanordnung (10) nach Anspruch 3, bei welcher der Master oder der Slave ein Beschleunigungsmesser (100a), ein Gyroskop (100b), ein Neigungssensor (100c), ein Temperatursensor, ein Fluidfüllstandsmesser, Durchflussmesser, ein Mikrofon, eine Kamera und/oder ein Hygrometer ist.

5. Energieverwaltungsanordnung (10) nach einem der vorstehenden Ansprüche, ferner umfassend einen Zeitgeber (40), der zum Senden des Unterbrechungssignals zu dem Verarbeitungsmodul (30), dem Host (70) oder einem oder mehreren sekundären Hosts (60) über die Unterbrechungskanäle (25) eingerichtet ist, um einen Verarbeitungsmodus aus einem Schlaf- oder Ruhemodus einzuleiten.

6. Energieverwaltungsanordnung (10) nach einem der vorstehenden Ansprüche, ferner umfassend unterbrechbare Stromleitungen (85), die mit dem einen oder den mehreren Peripheriegeräten (100), dem Host (70) oder einem oder mehreren der sekundären Hosts (60) verbunden sind.

7. Energieverwaltungsanordnung (10) nach Anspruch 6, ferner umfassend einen Leistungsmultiplexer (84) und/oder einen Impulsbreitenmodulator (90), der zum Zuführen der einstellbaren Versorgungsspannung eingerichtet ist.

8. Energieverwaltungsanordnung (10) nach einem der vorstehenden Ansprüche, ferner umfassend eine Verbindungseinheit zum Verbinden der Energieverwaltungsanordnung (10) mit einem IoT-Hub.

9. Energieverwaltungsanordnung (10) nach einem der vorstehenden Ansprüche, das eine oder die mehreren Peripheriegeräte (100) ein internes Register (110) aufweisend.

10. Energieverwaltungsanordnung (10) nach einem der Ansprüche 2 bis 9, bei welcher der Host (70) über die Datenkommunikationsleitungen (35) direkt mit dem einen oder den mehreren Peripheriegeräten (100) verbunden ist.

11. Energieverwaltungsanordnung (10) nach Anspruch 10, bei welcher der Host (70) so ausgelegt ist, dass er bei Empfang einer Anweisung direkt mit dem einen oder den mehreren Peripheriegeräten (100) kommuniziert.

12. Verfahren zum Verwalten eines Energieverbrauchs in einer Vorrichtung (5), die eine Energieverwaltungsanordnung (10) umfassend und ein oder mehrere Peripheriegeräte (100), die Energieverwaltungsanordnung (10) umfassend ein Verarbeitungsmodul (30), das Verfahren umfassend:
Einleiten (250) einer bidirektionalen Verbindung zwischen dem einen oder den mehreren Peripheriegeräten (100) und dem Verarbeitungsmodul (30) durch Austauschen eines bidirektionalen Unterbrechungssignals innerhalb der Energieverwaltungsanordnung (10) zum Aufwecken des Verarbeitungsmoduls (30) und des einen oder der mehreren Peripheriegeräte (100) und Einleiten des Austauschs von Datenelementen zwischen dem einen oder den mehreren Peripheriegeräten (100) und dem Verarbeitungsmodul (30);
Speichern von Logikoperationen in einem lokalen Speicher (50) in Bezug auf die Kommunikation mit und den Betrieb der Energieverwaltungsanordnung (10) und des einen oder der mehreren Peripheriegeräte (100), die Logikoperationen die Übertragung von Daten beinhaltend; und
Bereitstellen einer einstellbaren Versorgungsspannung innerhalb der Energieverwaltungsanordnung (10) und zu dem einen oder den mehreren Peripheriegeräten (100) und zu dem Verarbeitungsmodul (30) durch Stromleitungen (85) mittels einer Energieverwaltungseinheit (80) der Energieverwaltungsanordnung (10).

13. Verfahren nach Anspruch 12, bei welchem das Aufwecken des Verarbeitungsmoduls (30) bei Empfang des Unterbrechungssignals von dem einen oder den mehreren Peripheriegeräten (100) oder eines Aufwecksignals von einem Zeitgeber (40) eingeleitet wird.

14. Verfahren nach Anspruch 12 oder 13, ferner umfassend den Zugriff auf Anweisungen von einem lokalen Speicher (50); und
Durchführen (270) einer Logikoperation unter Verwendung der zugegriffenen Anweisungen auf dem einen oder den mehreren Peripheriegeräten (100).

15. Verfahren nach einem der Ansprüche 12 bis 14, ferner umfassend das Durchführen einer Logikoperation zum Starten eines Hosts (70) zum Empfangen von Daten von dem Verarbeitungsmodul (30) oder direkt von dem einen oder den mehreren Peripheriegeräten (100), bei welchem der Host zum Steuern und Festlegen von Regeln für die Energieverwaltungsanordnung (10) und das eine oder die mehreren Peripheriegeräte (100) eingerichtet ist.

16. Verfahren nach einem der Ansprüche 12 bis 15, ferner umfassend das Einschalten des Hosts (70).

17. Verfahren nach einem der Ansprüche 12 bis 16, ferner umfassend das Speichern (265) von aktualisierten Anweisungen in dem lokalen Speicher (50).

18. Verfahren nach einem der Ansprüche 12 bis 17, ferner umfassend das Übertragen von Anweisungen von dem Host (70) zu dem lokalen Speicher (50).

19. Verfahren nach einem der Ansprüche 12 bis 18, ferner umfassend das Festlegen der einstellbaren Versorgungsspannung.

## Revendications

1. Dispositif de gestion d'énergie (10) situé dans un appareil (5), le dispositif de gestion d'énergie (10) étant configuré pour gérer une consommation d'énergie de l'appareil (5), comprenant :
- un module de traitement (30) connecté à des lignes de communication de données (35) pour échanger des données au sein du dispositif de gestion d'énergie (10) et avec un ou plusieurs périphériques (100) ;
- des canaux d'interruption (25) configurés pour envoyer et recevoir un signal d'interruption bidirectionnel au sein du dispositif de gestion d'énergie (10), vers et depuis les un ou plusieurs des périphériques (100) pour réveiller le module de traitement (30) et vers un ou plusieurs périphériques (100) et initier ainsi un échange d'éléments de données entre les un ou plusieurs périphériques (100) et le module de traitement (30) ;
- un stockage local (50) connecté au module de traitement (30) et configuré pour stocker des opérations logiques concernant la communication avec et le fonctionnement du dispositif de gestion d'énergie (10) et des un ou plusieurs périphériques (100), les opérations logiques incluant un transfert de données ; et une unité de gestion d'énergie (80) connectée à des lignes d'alimentation (85) et configurée pour fournir une tension d'alimentation ajustable au sein du dispositif de gestion d'énergie (10) et aux un ou plusieurs périphériques (100) et au module de traitement (30) par l'intermédiaire de lignes d'alimentation (85).

2. Dispositif de gestion d'énergie (10) selon la revendication 1, comprenant en outre au moins l'un parmi un hôte (70) connecté aux lignes de communication de données (35), aux canaux d'interruption (25), et aux lignes d'alimentation (85), l'hôte étant configuré pour commander, et définir des règles pour, le dispositif de gestion d'énergie (10) et pour les un ou plusieurs périphériques (100).

3. Dispositif de gestion d'énergie (10) selon l'une quelconque des revendications précédentes, dans lequel les un ou plusieurs périphériques (100) comprennent un ou plusieurs parmi un maître ou un esclave.

4. Dispositif de gestion d'énergie (10) selon la revendication 3, dans lequel le maître ou l'esclave est un ou plusieurs parmi un accéléromètre (100a), un gyroscope (100b), un capteur d'inclinaison (100c), un capteur de température, un niveau de fluide, des débitmètres, un microphone, une caméra, et un hygromètre.

5. Dispositif de gestion d'énergie (10) selon l'une quelconque des revendications précédentes, comprenant en outre une minuterie (40) configurée pour envoyer le signal d'interruption à l'un parmi le module de traitement (30), l'hôte (70), ou un ou plusieurs parmi des hôtes secondaires (60) sur les canaux d'interruption (25) pour initier un mode de traitement depuis un mode de veille ou de repos.

6. Dispositif de gestion d'énergie (10) selon l'une quelconque des précédentes, comprenant en outre des lignes d'alimentation interruptibles (85) connectées aux un ou plusieurs périphériques (100), à l'hôte (70) ou à un ou plusieurs parmi les hôtes secondaires (60).

7. Dispositif de gestion d'énergie (10) selon la revendication 6, comprenant en outre au moins l'un parmi un multiplexeur de puissance (84) ou un modulateur de largeur d'impulsion (90), configuré pour fournir la tension d'alimentation ajustable.

8. Dispositif de gestion d'énergie (10) selon l'une quelconque des revendications précédentes, comprenant en outre une unité de connexion pour connecter le dispositif de gestion d'énergie (10) à un concentrateur IoT.

9. Dispositif de gestion d'énergie (10) selon l'une quelconque des revendications précédentes, dans lequel les un ou plusieurs périphériques (100) ont un registre interne (110).

10. Dispositif de gestion d'énergie (10) selon l'une quelconque des revendications 2 à 9, dans lequel l'hôte (70) est directement connecté aux un ou plusieurs périphériques (100) par l'intermédiaire des lignes de communication de données (35).

11. Dispositif de gestion d'énergie (10) selon la revendication 10, dans lequel l'hôte (70) est adapté pour communiquer directement avec les un ou plusieurs périphériques (100) lors de la réception d'une instruction.

12. Procédé de gestion d'une consommation d'énergie dans un appareil (5) comprenant un dispositif de gestion d'énergie (10) et un ou plusieurs périphériques (100), le dispositif de gestion d'énergie (10) comprenant un module de traitement (30), le procédé comprenant :
initier (250) une connexion bidirectionnelle entre les un ou plusieurs périphériques (100) et le module de traitement (30) en échangeant un signal d'interruption bidirectionnel au sein du dispositif de gestion d'énergie (10) pour réveiller le module de traitement (30) et les un ou plusieurs périphériques (100) et initier un échange d'éléments de données entre les un ou plusieurs périphériques (100) et le module de traitement (30) ;
stocker des opérations logiques dans un stockage local (50) concernant la communication avec et le fonctionnement du dispositif de gestion d'énergie (10) et des un ou plusieurs périphériques (100), les opérations logiques incluant un transfert de données ; et
fournir, au moyen d'une unité de gestion d'énergie (80) du dispositif de gestion d'énergie (10), une tension d'alimentation ajustable au sein du dispositif de gestion d'énergie (10) et aux un ou plusieurs périphériques (100) et au module de traitement (30) par l'intermédiaire de lignes d'alimentation (85).

13. Procédé selon la revendication 12, dans lequel le réveil du module de traitement (30) est initié lors de la réception du signal d'interruption provenant des un ou plusieurs périphériques (100) ou d'un signal de réveil provenant d'une minuterie (40).

14. Procédé selon la revendication 12 ou 13, comprenant en outre :
accéder à des instructions depuis un stockage local (50) ; et
exécuter (270) une opération logique en utilisant les instructions accédées sur les un ou plusieurs périphériques (100).

15. Procédé selon l'une quelconque des revendications 12 à 14, comprenant en outre : exécuter une opération logique pour démarrer un hôte (70) pour recevoir des données depuis le module de traitement (30) ou directement depuis les un ou plusieurs périphériques (100), l'hôte étant configuré pour commander, et définir des règles pour, le dispositif de gestion d'énergie (10) et les un ou plusieurs périphériques (100).

16. Procédé selon l'une quelconque des revendications 12 à 15, comprenant en outre : allumer l'hôte (70).

17. Procédé selon l'une des revendications 12 à 16, comprenant en outre :
stocker (265) des instructions mises à jour dans le stockage local (50).

18. Procédé selon l'une des revendications 12 à 17, comprenant en outre :
transférer des instructions depuis l'hôte (70) vers le stockage local (50).

19. Procédé selon l'une des revendications 12 à 18, comprenant en outre :
régler la tension d'alimentation ajustable.
